# FASCICULE DE BREVET EUROPEEN

(11) **EP 3 022 056 B1**
(45) Date de publication et mention de la délivrance du brevet: **12.09.2018**
(21) Numéro de dépôt: 14741624.2
(22) Date de dépôt: 21.07.2014
(51) Int. Cl.: B32B 27/34, C08J 5/18, C08G 69/26, C08G 69/42, E04B 1/66

(54) **BARRIERE A LA VAPEUR ADAPTATIVE**
FEUCHTEADAPTATIVE DAMPFBREMSE
ADAPTABLE WATER VAPOUR BARRIER

(30) Priorité: 19.07.2013 FR 1301724
(43) Date de publication de la demande: 25.05.2016
(73) Titulaire: Rhodia Operations, 75009 Paris (FR)
(72) Inventeur: FILLOT, Louise-Anne, F-69120 Vaulx-en-Velin (FR); JEOL, Stéphane, Cumming, GA 30041 (US)
(74) Mandataire: Delenne, Marc
(86) Numéro de dépôt international: PCT/EP2014/065646
(87) Numéro de publication internationale: WO 2015/007918

(56) Documents cités:
- WO-A1-96/33321
- WO-A1-2011/000763
- WO-A1-2011/147739
- US-A- 5 242 733
- US-A1- 2012 302 698
- KÜNZEL, H.M. & KASPER, F.-J.: "Von der Idee einer feuchteadaptiven Dampfbremse bis zur Markteinführung", BAUPHYSIK, vol. 20, no. 6, 1 janvier 1998 (1998-01-01), pages 257-260, XP055112163,

## Description

La présente invention a trait à une barrière à la vapeur d'eau. Celle-ci peut être dite « respirante » ou « adaptative », c'est-à-dire présentant une faible perméabilité à la vapeur d'eau lorsque le taux d'humidité est faible et une perméabilité plus élevée lorsque le taux d'humidité est élevé. Elle peut également être désignée comme barrière modulable à la vapeur. En d'autres termes ledit matériau barrière à la vapeur s'adapte à l'humidité ambiante. L'invention concerne plus spécifiquement l'utilisation d'un polyamide spécifique pour préparer une telle barrière.

Des documents de l'art antérieur décrivent des barrières à la vapeur, notamment adaptatives à l'humidité ambiante. Cependant, celles-ci présentent fréquemment des propriétés barrières à la vapeur limitées à faible humidité, ce qui peut conduire l'utilisation de quantités importantes de matériau barrière, et notamment de film, présentant une assez grande épaisseur, et encore plus fréquemment un différentiel insuffisant entre la perméabilité à la vapeur à faible et à fort taux d'humidité, i.e. une faible adaptation à l'humidité ambiante.

En particulier, le document EP0821755 décrit des barrières à la vapeur comprenant du PA6. Les propriétés barrières à la vapeur du PA6 peuvent être insuffisantes. Par ailleurs, lorsque des additifs sont ajoutés afin de diminuer la perméabilité à la vapeur à faible taux d'humidité cela a pour conséquence de diminuer également la perméabilité à la vapeur à fort taux d'humidité, et lorsque des additifs sont ajoutés pour augmenter la perméabilité à la vapeur à fort taux d'humidité cela a pour conséquence d'augmenter également la perméabilité à la vapeur à faible taux d'humidité.

Le document US20120302698 décrit des barrières comprenant du PA6 et des additifs du type polymères afin de présenter trois niveaux de perméabilité à la vapeur selon l'humidité moyenne. Ces mélanges conduisent notamment à des niveaux de perméabilité à la vapeur à faible humidité qui peuvent être insatisfaisantes. En outre, ces mélanges peuvent être conduire à un recyclage du matériau assez complexe.

Il existe donc un besoin pour des barrières permettant de résoudre en tout ou partie les inconvénients évoqués ci-dessus, et en particulier ayant une plus faible perméabilité à la vapeur à faible humidité, et une plus forte perméabilité à la vapeur à fort taux d'humidité, ou encore présentant un fort différentiel de perméabilité à la vapeur selon que le taux d'humidité est fort ou faible.

Dans le cadre de la présente invention un taux d'humidité moyen de 25 %, RH25, est considéré comme un faible taux d'humidité et un taux d'humidité moyen de 75 %, RH75, comme un fort taux d'humidité.

La présente invention concerne une barrière à la vapeur d'eau, en particulier une barrière à la vapeur d'eau adaptative à l'humidité ambiante, comprenant, voire consistant en,
- un film, un textile ou une couche de matériau P, ledit matériau P comprend, voire consiste en, au moins un copolymère A qui est un polyamide de type PAXY/XAIS Mⁿ⁺_{1/n}, en particulier PA66/6AISMⁿ⁺_{1/n}, plus particulièrement PA66/6AISLi et/ou PA PA66/6AISNa, ou de type PAZ/XAISMⁿ⁺_{1/n},
   dans lesquels
   ∘ X, Y et Z représentent indépendamment les uns des autres des entiers allant de 3 à 36, en particulier de 4 à 18, notamment de 4 à 12,
   ∘ Mⁿ⁺_{1/n}, avec n représentant le nombre de charges de M, et M représente Li⁺, Na⁺, K⁺, Ag⁺, Cu⁺, Cu²⁺ Zn²⁺, Mn²⁺, Mg²⁺, Fe²⁺, Fe³⁺, Al³⁺, NH⁴⁺, et/ou phosphonium, en particulier Li⁺ et/ou Na⁺, notamment Li⁺, et
   ∘ AIS représente le résidu issu de l'acide 5-sulfoisophtalique et
- éventuellement un support et/ou un adhésif,
   en particulier ladite barrière, et en particulier ledit film, textile ou couche de matériau P, présente un rapport (perméabilité à la vapeur d'eau, à 23°C et à un taux d'humidité moyen de 75 %, c'est-à-dire à RH75) / (perméabilité à la vapeur d'eau, à 23°C et à un taux d'humidité moyen de 25 %, c'est-à-dire à RH25) supérieur ou égal à 15, notamment supérieur ou égal à 20, en particulier supérieur ou égal à 25, tout particulièrement supérieur ou égal à 30, voire supérieur ou égal à 35,
   tout particulièrement, ladite barrière, et en particulier ledit film, textile ou couche de matériau P, présente une perméabilité à la vapeur d'eau :
- inférieure ou égale à 0,25 g.mm/m².J, à 23°C et à un taux d'humidité moyen de 25 %, et/ou
- supérieure ou égale à 3 g.mm/m².J, à 23°C et à un taux d'humidité moyen de 75 %.

Selon un premier aspect, la présente invention a pour objet l'utilisation à titre de barrière à la vapeur d'eau, en particulier de barrière à la vapeur d'eau adaptative à l'humidité ambiante,,
- d'un film, d'un textile ou d'une couche de matériau P, ledit matériau P comprenant, voire consistant en, au moins un copolymère A qui est un polyamide de type PAXY/XAIS Mⁿ⁺_{1/n}, en particulier PA66/6AISMⁿ⁺_{1/n}, plus particulièrement PA66/6AISLi et/ou PA PA66/6AISNa, ou de type PAZ/XAISMⁿ⁺_{1/n},
   dans lesquels
   ∘ X, Y et Z représentent indépendamment les uns des autres des entiers allant de 3 à 36, en particulier de 4 à 18, notamment de 4 à 12,
   ∘ Mⁿ⁺_{1/n}, avec n représentant le nombre de charges de M, et M représente Li⁺, Na⁺, K⁺, Ag⁺, Cu⁺, Cu²⁺ Zn²⁺, Mn²⁺, Mg²⁺, Fe²⁺, Fe³⁺, Al³⁺, NH⁴⁺, et/ou phosphonium, en particulier Li⁺ et/ou Na⁺, notamment Li⁺, et
   ∘ AIS représente le résidu issu de l'acide 5-sulfoisophtalique et
éventuellement en association avec un support et/ou un adhésif.

En particulier ledit film, textile ou couche de matériau P utilisé présente un rapport (perméabilité à la vapeur d'eau, à 23°C et à un taux d'humidité moyen de 75 %, à c'est-à-dire à RH75) / (perméabilité à la vapeur d'eau, à 23°C et à un taux d'humidité moyen de 25 %, c'est-à-dire à RH25) supérieur ou égal à 15, notamment supérieur ou égal à 20, en particulier supérieur ou égal à 25, tout particulièrement supérieur ou égal à 30, voire supérieur ou égal à 35.

Tout particulièrement ledit film, textile ou couche de matériau P utilisé présente une perméabilité à la vapeur d'eau :
- inférieure ou égale à 0,25 g.mm/m².J, à 23°C et à un taux d'humidité moyen de 25 %, et/ou
- supérieure ou égale à 3 g.mm/m².J, à 23°C et à un taux d'humidité moyen de 75 %.

Le matériau P utilisé est donc une composition comprenant, voire consistant, en au moins un copolyamide A.

Selon l'invention, le copolymère A, voire le matériau P, notamment sous forme d'un film, de couche ou de textile de matériau P, peut être utilisé pour fabriquer une barrière à la vapeur d'eau, en particulier une barrière à la vapeur d'eau adaptative à l'humidité ambiante.

Par « taux d'humidité moyen de A % » (ou bien encore humidité relative moyenne), ou RH_{A}, on entend au sens de la présente invention que d'un côté d'une membrane de matériau P le taux d'humidité est de B %, soit RH_{B}, et de l'autre de C %, soit RH_{C}, B et C étant tels que [(B+C)/2] = A. En particulier lorsque A = 25 alors B = 0 et C = 50, et lorsque A = 75 alors B = 50 et C = 100. Une telle configuration est décrite dans les exemples ci-dessous.

AISMⁿ⁺_{1/n} peut être représenté de la manière suivante : 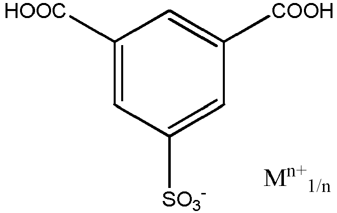 Par « PAXY/XAISMⁿ⁺_{1/n} » dans lesquels X et Y sont indépendamment l'un de l'autre et représentent des entiers allant de 3 à 36, en particulier de 4 à 18, notamment de 4 à 12, on entend un copolymère obtenu par polymérisation, en particulier statistique,
- d'une diamine, en particulier aliphatique, comprenant X atomes de carbone séparant les deux fonctions amines impliquées dans les liaisons amides,
- d'un diacide, en particulier aliphatique, comprenant Y-2 atomes de carbone séparant les deux fonctions acides impliquées dans les liaisons amides, et
- d'acide 5-sulfoisophtalique de lithium, de sodium, de potassium, d'argent, de cuivre, I ou II, de zinc, de manganèse, de magnésium, de fer, Il ou III, d'ammonium ou de phosphonium.

La diamine peut être choisie parmi 1,4-diaminobutane, 1,5-diaminopentane, 1,6-diaminohexane ou hexaméthylène diamine (HMD), 2-méthyl pentaméthylène diamine, 2-méthyl hexaméthylène diamine, 3-méthyl hexaméthylène diamine, 2,5-diméthyl hexaméthylène diamine, 2,2-diméthylpentaméthylène diamine, 1,8-diaminooctane, méthyl-1,8-diamino octane, 1,9-diamino nonane, 5-méthylnonane diamine, 1,10-diamino décane ou décaméthylènediamine, 1,12-diamino dodécane, ou dodécaméthylène diamine, et N-(6-aminohexyl)-N-méthyl-1,6-hexanediamine.

Le diacide peut être choisi parmi l'acide oxalique, l'acide succinique (HOOC-(CH₂)₂-COOH), l'acide glutarique (HOOC-(CH₂)₃-COOH), l'acide 2-méthyl-glutarique (HOOC-CH(CH₃)-(CH₂)₂-COOH), l'acide 2,2-diméthyl-glutarique (HOOC-C(CH₃)₂-(CH₂)₂-COOH), l'acide adipique (HOOC-(CH₂)₄-COOH), l'acide 2,4,4-triméthyl-adipique (HOOC-CH(CH₃)-CH₂-C(CH₃)₂-CH₂-COOH), l'acide pimélique (HOOC-(CH₂)₅-COOH), l'acide subérique (HOOC-(CH₂)₆-COOH), l'acide azélaique (HOOC-(CH₂)₇-COOH), l'acide sébacique (HOOC-(CH₂)₈-COOH), l'acide undécanedioique (HOOC-(CH₂)₉-COOH), et l'acide dodécanedioique (HOOC-(CH₂)₁₀-COOH), l'acide téréphtalique, l'acide isophtalique.

Tout particulièrement, le PAXY/XAISMⁿ⁺_{1/n} est choisi parmi le PA46/4AISMⁿ⁺_{1/n}, PA4104AISMⁿ⁺_{1/n}, PA412/4AISMⁿ⁺_{1/n}, PA66/6AISMⁿ⁺_{1/n}, PA610/6AISMⁿ⁺_{1/n}, PA 106/10AISMⁿ⁺_{1/n}, PA 612/6AISMⁿ⁺_{1/n}, PA1010/10AISMⁿ⁺_{1/n}, PA1012/10AISMⁿ⁺_{1/n} et PA1212/12AISMⁿ⁺_{1/n}, PA 66/6T/6AISMⁿ⁺_{1/n}, notamment Mⁿ⁺_{1/n} est du lithium et/ou du sodium, et encore plus particulièrement il s'agit de PA66/6AISLi et/ou de PA66/6AISNa.

Par « PAZ/XAISMⁿ⁺_{1/n} », dans lesquels X et Z sont indépendamment l'un de l'autre et représentent des entiers allant de 3 à 36, en particulier de 4 à 18, notamment de 4 à 12, on entend un copolymère obtenu par polymérisation, en particulier statistique,
- d'un amino-acide ou d'un lactame, en particulier aliphatique, comprenant Z-1 atomes de carbone séparant la fonction acide et la fonction amine impliquées dans les liaisons amides,
- d'une diamine, en particulier aliphatique, comprenant X atomes de carbone séparant les deux fonctions amines impliquées dans les liaisons amides, et
- d'acide 5-sulfoisophtalique de lithium, de sodium, de potassium, d'argent, de cuivre, I ou II, de zinc, de manganèse, de magnésium, de fer, Il ou III, d'ammonium ou de phosphonium, en particulier de lithium et/ou de sodium.

L'amino-acide ou le lactame peut être choisi parmi le caprolactame, l'acide 6-aminohexanoique, l'acide 10-aminodecanoique, l'acide 11-aminoundecanoique, et le 12-dodécanolactame.

Tout particulièrement, le PAZ/XAISMⁿ⁺_{1/n} est choisi parmi le PA6/6AISMⁿ⁺_{1/n}, PA11/6AISMⁿ⁺_{1/n}, PA12/6AISMⁿ⁺_{1/n}, et encore plus particulièrement il s'agit de PA6/6AiSMⁿ⁺_{1/n}, tout particulièrement Mⁿ⁺_{1/n} est Li⁺ et/ou Na⁺.

Le copolymère A comprend, voire est constitué de, PA66/6AISLi et/ou PA66/6AISNa.

Par « PA66/6AISLi et/ou PA66/6AISNa » on entend un copolymère, en particulier statistique, comprenant un motif de répétition de type hexaméthylènediamine-acide adipique et un motif de répétition de type hexaméthylènediamine-sel de lithium et/ou de sodium d'acide 5-sulfoisophtalique.

Le copolymère A de type PAXY/XAISMⁿ⁺_{1/n} peut comprendre un autre monomère, en particulier diacide, et tout particulièrement de l'acide téréphtalique, notamment afin de conduire à PAXY/XT/XAISMⁿ⁺_{1/n}.

Tout particulièrement le copolymère A, notamment le PA66/6AISLi et/ou le PA66/6AISNa, comprend une teneur en motif de répétition aromatique, notamment 6AISLi et 6AISNa, allant de 0,1 à 60 mol%, en particulier de 0,1 à 20 mol%, notamment de 0, 5 à 20 mol%, par exemple de 0,5 à 15 mol%, par rapport au nombre total de motif de répétition dans le polyamide. Cette teneur peut également être comprise entre 1 et 15 mol%, en particulier entre 2 et 10 mol%, notamment entre 4 et 10 mol%, par rapport au nombre total de motif de répétition dans le polyamide.

Le copolymère A peut encore comprendre des limiteurs de chaines monofonctionnels ou encore comprendre un excès en l'un de ses composants. En particulier le copolymère A est déséquilibré, notamment la concentration en extrémités amine GTA (exprimée en meq/kg) est supérieur ou égal à 1,1 x GTC (concentration en extrémités acide, exprimée en meq/kg) ou le GTC est supérieur ou égale à 1,1 x GTA.

Le copolymère A peut être préparé selon un procédé de synthèse connu d'un polyamide. Un catalyseur et/ou des stabilisants peuvent être ajoutés lors de la synthèse du copolymère A.

Le copolymère A peut présenter une masse moléculaire moyen en nombre, Mn, supérieur ou égal à 8 000 g/mol.

En particulier le copolymère A est semi-cristallin, tout particulièrement il présente un taux de cristallinité mesuré par calorimétrie différentielle comme défini dans les exemples supérieur ou égal à 20%.

En particulier, le copolymère A présente une viscosité apparente en fondu à 100 s⁻¹ et à la température de fusion du copolymère A + 15°C allant de 20 Pa.s à 800 Pa.s.

Tout particulièrement le copolymère A est un copolymère statistique.

Selon une variante, le matériau P utilisé peut comprendre, outre le copolymère A, au moins un autre polymère thermoplastique, en particulier un autre polyamide ou une polyoléfine, un agent modificateur du choc et/ou un plastifiant.

Selon un autre mode de réalisation particulier le matériau P utilisé comprend au moins un autre polymère, dans ce cas le polyamide constitue une phase continue. En particulier ledit polymère est choisi parmi les agents modificateurs de chocs, et/ou des polymères thermoplastiques tels que les polyéthylènes, ou PE, les polystyrènes, ou PS, les polypropylènes, ou PP, les polyesters, les polycarbonates, ou PC, les polyphénylène oxydes ou PPO les polyphénylène éthers, ou PPE, et leurs mélanges. Ces polymères peuvent être présents en une teneur allant de 3 à 60 %, en particulier de 3 à 50%, notamment de 5 à 40 %, par exemple de 5 à 30 % en poids par rapport au poids total du matériau P.

Le matériau P utilisé peut comprendre au moins un agent modificateur du choc, c'est-à-dire un composé capable de modifier la résistance aux chocs d'une composition polyamide. Ces agents modificateurs du choc et également les autres polymères thermoplastiques comprennent préférentiellement des groupements fonctionnels réactifs avec le polyamide.

On entend par « groupements fonctionnels réactifs avec le polyamide », des groupements capables de réagir ou d'interagir chimiquement avec les fonctions amides, acides ou amines du polyamide, notamment par covalence, interaction ionique ou hydrogène, ou liaison de van der Waals. De tels groupements réactifs permettent de générer des morphologies de mélange présentant des tailles caractéristiques de domaine (dimension la plus faible d'un domaine) inférieures à 5 µm et d'assurer une bonne dispersion des agents modificateurs de chocs dans la matrice polyamide. On obtient généralement une bonne dispersion avec des particules d'agents modificateurs de chocs ayant une taille moyenne comprise entre 0,1 et 2 µm dans la matrice.

Tout particulièrement les agents modificateurs du choc et les autres polymères thermoplastiques comprennent des groupements fonctionnels réactifs avec le polyamide en fonction de la nature acide ou amine du déséquilibre ΔGT=GTC-GTA (concentration en groupements terminaux acide GTC moins concentration en groupements terminaux amine GTA) du polyamide. Ainsi par exemple, si le ΔGT est « acide » (GTC>GTA) on utilisera préférentiellement des groupements fonctionnels réactifs capables de réagir ou d'interagir chimiquement avec les fonctions acides du polyamide, notamment par covalence, interaction ionique ou hydrogène ou liaison de van der Waals. Si par exemple, le ΔGT est « aminé » (GTA>GTC) on utilisera préférentiellement des groupements fonctionnels réactifs capables de réagir ou d'interagir chimiquement avec les fonctions amines du polyamide, notamment par covalence, interaction ionique ou hydrogène ou liaison de van der Waals. On utilise tout particulièrement des agents modificateurs du choc ayant des groupements fonctionnels réactifs avec les groupements terminaux amine du polyamide.

Les autres polymères thermoplastiques et les agents modificateurs du choc peuvent comprendre en eux-mêmes des groupements fonctionnels réactifs avec le polyamide, par exemple pour ce qui concerne l'éthylène acide acrylique (EAA).

Il est également possible de leur adjoindre des groupements fonctionnels réactifs avec le polyamide, généralement par greffage ou copolymérisation, par exemple pour l'éthylène-propylène-diène (EPDM) greffé par de l'anhydride maléique.

On peut utiliser les autres polymères thermoplastiques et les agents modificateurs de chocs qui sont des composés, oligomériques ou polymériques, comprenant au moins un des monomères suivants, ou leur mélange : éthylène, propylène, butène, isoprène, diène, acrylate, butadiène, styrène, octène, acrylonitrile, acide acrylique, acide méthacrylique, vinyle acétate, esters vinyliques tels que les esters acryliques et méthacryliques et le glycidyle méthacrylate. Selon une variante ces composés comprennent en outre d'autres monomères que ceux mentionnés précédemment. Selon une autre variante ils ne comprennent que les monomères cités précédemment. Selon encore une autre variante, ces composés sont des ionomères.

La base du composé modificateur du choc ou des autres polymères thermoplastiques, éventuellement appelé base élastomérique, peut être choisie dans le groupe comprenant : les polypropylènes, les polybutènes, les polyisoprènes, les copolymères d'éthylène-propylène (EPR), les copolymères d'éthylène-propylène-diène (EPDM), les copolymères d'éthylène et de butène, les copolymères d'éthylène et d'acrylate, les copolymères de butadiène et de styrène, les copolymères de butadiène et d'acrylate, les copolymères d'éthylène et octène, les copolymères butadiène acrylonitrile, les copolymères d'éthylène et d'acide acrylique ou métacrylique, notamment les éthylène acide acrylique (EAA), les éthylène vinyle acétate (EVA), les éthylène ester acrylique (EEA), les copolymères acrylonitrile butadiène styrène (ABS), les copolymères block styrène éthylène butadiène styrène (SEBS), les copolymères styrène butadiène styrène (SBS), les élastomères core-shell type méthacrylate-butadiène-styrène (MBS), ou des mélanges d'au moins deux élastomères listés ci-dessus.

Outre les groupements listés ci-dessus, ces autres polymères thermoplastiques et ces agent modificateurs de chocs peuvent comprendre, généralement greffés ou copolymérisés, des groupements fonctionnels réactifs avec le polyamide, tel que notamment des groupements fonctionnels suivant : les acides, tels que les acides carboxyliques, les acides salifiés, les esters en particulier, les acrylates et les méthacrylates, les ionomères, les groupes glycidyles notamment époxy, les esters glycidyles, les anhydrides notamment les anhydrides maléiques ou phtaliques, les oxazolines, les maléïmides, ou leurs mélanges.

Des tels groupements fonctionnels sur les élastomères sont par exemple obtenus par utilisation d'un co-monomère lors de la préparation de l'élastomère ou par greffage par voie radicalaire, notamment par extrusion réactive.

Comme autres polymères thermoplastiques et agents modificateurs de chocs comprenant des groupements fonctionnels réactifs avec le polyamide, on peut notamment citer les terpolymères d'éthylène, ester acrylique et glycidyle méthacrylate, les copolymères d'éthylène et de butyl ester acrylate, les copolymères d'éthylène, n-butyl acrylate et glycidyle méthacrylate, les copolymères d'éthylène et d'anhydride maléique, les copolymères éthylène-propylène-diène ou copolymères éthylène-propylène greffés par de l'anhydride maléique, les copolymères styrène-maléïmides greffés avec de l'anhydride maléique, les copolymères styrène-éthylène-butylène-styrène modifiés avec de l'anhydride maléique, les copolymères styrène-acrylonitrile greffés anhydrides maléiques, les copolymères acrylonitrile butadiène styrène greffés anhydrides maléiques, et leurs versions hydrogénées.

La proportion en poids des agents modificateur du choc dans le matériau P utilisé peut aller de 3 à 60 %, en particulier de 3 à 40%, notamment de 5 à 40 %, par exemple de 5 à 30 % en poids par rapport au poids total du matériau P.

En particulier la teneur totale en agents modificateur du choc et en autre polymère peut aller de 3 à 60 %, en particulier de 3 à 40%, notamment de 5 à 40 %, par exemple de 5 à 30 % en poids par rapport au poids total du matériau P.

Selon une autre variante, le matériau P utilisé comprend une teneur en copolymère A, notamment en PA66/6AISM, d'au moins 90 % en poids, notamment d'au moins 95 % en poids, en particulier d'au moins 98 % en poids par rapport au poids total du matériau P, encore plus particulièrement, le matériau P utilisé consiste en copolymère A, notamment en PA66/6AISM. Dans cette variante, le matériau P utilisé peut être dépourvu d'autres polymères que le copolymère A.

Le matériau P utilisé peut comprendre d'autres additifs tels que des pigments, des charges minérales ou organiques, des matifiants, des stabilisants thermiques, lumière et/ou UV, des lubrifiants, des plastifiants ou des agents ignifugeants.

Les pigments peuvent être choisis parmi le noir de carbone, les quinacridones, les pyrroles.

Les charges peuvent être choisies parmi :
- les charges minérales, en particulier choisies parmi la montmorillonite, le talc notamment micronisé, le phosphate de zirconium, le mica, la sepiolite, l'oxyde de zinc, le carbonate de calcium, la silice, les particules métalliques comme l'argent, le graphite, les nanotubes de carbone, les sels d'acide phosphinique comme les phosphinates de sodium, de calcium et/ou de zinc, le fluorure de calcium, le disulfure de molybdène, la silice, l'alumine, le dioxyde de titane, et leurs mélanges,
- les charges organiques, notamment choisies parmi le PA22, les aramides notamment sous forme de fibres, les cyclodextrines, et leurs mélanges, et
- les mélanges de charges organique(s) et minérale(s).

Tout particulièrement le matériau P utilisé ne comprend pas de charges de renfort, et en particulier pas de fibres de verres.

Les charges peuvent être présentes en une teneur allant de 0,1 à 10 %, en particulier de 0,1 à 5 % en poids par rapport au poids total du copolymère A.

Les stabilisants thermiques et/ou lumière peuvent être choisis parmi CuI/KI, CuO/KBr, Cu₂O/KBr, les composés phénoliques encombrés, les stabilisants présentant au moins un motif amine encombrée de type HALS, les stabilisants phosphorés organiques ou inorganiques, tel que de l'hypophosphite de sodium ou de manganèse. Ces stabilisants peuvent être présents en une teneur allant de 0,2 à 2% en poids par rapport au poids total du matériau P.

Le matériau P utilisé peut comprendre un lubrifiant, ou d'un mélange de lubrifiants. En particulier le lubrifiant peut être présent en une teneur allant de 0,1 à 5 % en poids par rapport au poids total du matériau P.

Le lubrifiant peut être choisi parmi les acides gras, les sels métalliques d'acides gras, les esters d'acides gras, les amides d'acides gras, comme la N,N'-éthylènebis(stéaramide), et leurs mélanges. Ces composés peuvent être saturés ou insaturés. Comme acides gras pouvant convenir dans le cadre de l'invention, on peut citer les acides gras comprenant au moins 16 atomes de carbone. A titre d'exemples de tels acides gras on peut citer l'acide laurique, l'acide myristique, l'acide palmitique, l'acide stéarique, l'acide alginique, l'acide béhénique, l'acide lignocérique, l'acide sérotinique, l'acide mélissique, l'acide eicosanique. L'acide stéarique est préféré. Les acides gras sont avantageusement des acides carboxyliques mono- ou divalents de 6 à 24 atomes de carbone. Parmi ces acides divalents on peut citer l'acide pélargonique, l'acide margarique, l'acide dodécanedicarboxylique.

Comme sel métallique d'acide gras, on choisit préférentiellement des sels d'acide gras tels que décrit ci-dessus. A titre d'exemple de sels métalliques d'acides gras, on peut citer le stéarate d'aluminium, de calcium, de magnésium ou de zinc. On peut également citer le distéarate d'aluminium, le tristéarate d'aluminium, etc. De préférence, le sel métallique d'acide gras est le distéarate d'aluminium.

Les acides gras et les sels métalliques d'acide gras peuvent présenter un effet limiteur de chaîne du polyamide.

Comme esters d'acides gras on peut citer les esters obtenus par réaction entre au moins un acide gras ci-dessus défini et au moins un alcool gras aliphatique, qui comprend généralement au moins 12 atomes de carbone. A titre d'exemple d'alcools gras on peut citer l'alcool laurylique, l'alcool myristylique, l'alcool palmitylique, l'alcool stéarylique, l'alcool eicosylique, l'alcool biphénylique, l'alcool tétracosylique, l'alcool sérotinylique, l'alcool mélissinylique. Il peut aussi s'agir d'alcools gras éthoxylés.

Le lubrifiant peut être une paraffine. Les paraffines sont sous forme de substances pures ou de mélanges industriels. Il peut s'agir d'huiles d'hydrocarbures ou de cires. Il s'agit généralement de composés hydrocarbonés aliphatiques saturés ou insaturés. Avantageusement le lubrifiant est une paraffine dont le nombre moyen d'atomes de carbone est compris entre 8 et 100, de préférence entre 12 et 80 et avantageusement entre 15 et 50.

Le matériau P utilisé peut comprendre un agent ignifugeant. Un agent ignifugeant est un composé permettant de diminuer la propagation de la flamme et/ou ayant des propriétés d'ignifugation. Parmi les agents ignifugeants habituellement utilisés dans des compositions ignifugées on peut citer ceux décrits dans les brevets US6344158, US6365071, US6211402 et US6255371.

L'agent ignifugeant peut être un agent ignifugeant comprenant du phosphore, un agent ignifugeant de type composé organique azoté, un agent ignifugeant contenant des dérivés halogénés.

En particulier l'agent ignifugeant peut être une association synergique de composés contenant du phosphore comme les oxydes de phosphines, les acides phosphoniques ou leur sels ou les acides phosphiniques ou leur sels, et les phosphonates cycliques ; avec des dérivés azotés tels que le mélam, le mélem, le phosphate de mélamine, les polyphosphates de mélamine, les pyrophosphates de mélamine ou les polyphosphates d'ammonium.

Le matériau P utilisé peut comprendre une teneur en agent ignifugeant allant de 5 à 40 % en poids, notamment de 10 à 30 % en poids par rapport au poids total du matériau P.

Le matériau P utilisé peut encore comprendre au moins un plastifiant. Le(s) plastifiant(s) peu(ven)t être choisi(s) parmi les dérivés de benzène sulfonamide, tels que le n-butyl benzène sulfonamide (BBSA), l'éthyl toluène sulfonamide ou le N-cyclohexyl toluène sulfonamide ; les polyéthylènes glycols ou les polypropylène glycols ; les esters d'acides hydroxy-benzoiques, tels que le parahydroxybenzoate d'éthyl-2 hexyle et le parahydroxybenzoate de décyl-2 hexyle ; les esters ou éthers du tétrahydrofurfuryl alcool et les esters de l'acide citrique ou de l'acide hydroxy-malonique. Le matériau P peut comprendre une teneur en plastifiant allant de 1 à 30 % en poids, notamment de 5 à 20 % en poids par rapport au poids total du matériau P.

Le matériau P utilisé se présente sous forme de film, de textile ou de couche. Ce matériau peut se présenter sous forme de rouleau, en particulier ayant une largeur d'au moins 50 cm, voire d'au moins 1 m.

Le film de matériau P peut présenter une épaisseur allant de 10 à 500 µm, en particulier de 20 à 400 µm, notamment de 30 à 300 µm.

Lorsque le matériau P utilisé se présente sous forme de couche, celle-ci peut présenter une épaisseur allant de 1 à 500 µm, notamment de 10 à 200 µm. Avantageusement, ladite couche est supportée par un renfort.

La couche ou le film peuvent en particulier être déposés par pulvérisation ou par application d'une dispersion de matériau P, notamment à la manière d'une peinture.

Le textile peut présenter une épaisseur allant de 50 µm à 2 mm, en particulier de 300 à 800 µm. Il est en particulier tissé, bien entendu de manière à ce qu'il présente les caractéristiques de perméabilité à la vapeur présentées dans la description.

En particulier, le film, la couche et/ou le textile de matériau P utilisé est étanche à l'eau.

En particulier, le film, la couche ou le textile de matériau P utilisé à titre de barrière à la vapeur présente une bonne étanchéité à l'air.

Le support peut être solide ou liquide. Lorsqu'il est solide, il présente en général une fonction de renfort, notamment à la déchirure. Lorsqu'il est liquide il permet en général de déposer une couche de matériau P sur un support solide. Dans ce cas la couche peut être obtenue par une application comme de la peinture.

Le support solide peut être présent sur toute la surface de la barrière ou au contraire sur certaines zones, notamment sur les côtés, par exemple afin d'améliorer la résistance au déchirement, notamment pour permettre à la barrière d'être fixée efficacement, par exemple par des agrafes.

Le support solide peut être un matériau cellulosique, notamment renforcé en fibres, comme un papier, une membrane, notamment en étoffe de fibres synthétiques ou un film polyéthylène perforé, par exemple une étoffe constituée de fibres tissées ou non tissées, notamment de polyoléfine ou polyester, un matériau de construction comme des plaques de matériaux de constructions, notamment en plâtre, ciment, etc, ou encore sur des plaques d'isolants, comme de la laine de verre.

Les matériaux de construction sont utilisés pour réaliser des structures de murs ou des toitures. On peut notamment citer comme matériaux de construction, les matériaux de structure constitués de bois, de béton armé ou non, de briques ou de métal, les isolants fibreux tels que les laines minérales, les fibres naturelles, les isolants non fibreux tels que les mousses minérales, le verre cellulaire, les isolants organiques synthétiques tels que le polystyrène, les matériaux de parement tels que les plaques de plâtre cartonnées ou non, les lambris bois ou plastiques, les panneaux de particules ou les carreaux de céramique, les matériaux étanches pour écran de toiture tels que les films plastiques, les étoffes de fibres synthétiques ou les feutres bitumineux, les matériaux de couverture de toiture ou de bardage extérieur tels que les tuiles, les ardoises, les plaques métalliques, le verre, les matières plastiques ou organiques, le bois, les matériaux bitumineux ou asphaltiques, ou la fibre-ciment.

Dans un mode de réalisation particulier, ledit matériau P est utilisé, à titre de barrière à la vapeur, en association avec un support solide qui peut être en particulier un matériau de construction et/ou une membrane du type précité, notamment une membrane non tissée, qui peut typiquement jouer le rôle de membrane de renfort (renfort solide du matériau P).
De préférence, le support solide comprend, voire consiste en, un matériau de construction tel que décrit précédemment.
Dans un mode de réalisation, le support solide comprend, voire consiste en, un matériau de construction et une membrane.
Dans un mode de réalisation particulier, le support solide utilisé en association avec le matériau P est choisi parmi le bois et les isolants fibreux. Le cas échéant, ce support solide peut être utilisé en association avec un renfort solide du type précité.

En général, la couche, le film ou le textile de matériau P utilisé est présent sur l'extérieur du renfort solide, mais selon une autre variante cette couche, ce film ou ce textile de matériau P utilisé peut être entouré de deux supports solides, identiques ou différents.
Le matériau P peut notamment être associé, par exemple par co-laminage, à une membrane non tissée comme renfort solide. Le matériau P qu'il soit ou non associé à une telle membrane peut être utilisé avec un matériau de construction. Typiquement, le matériau P associé ou non à une telle membrane peut être entouré de deux matériaux de construction, identiques ou différents, par exemple du bois.

Lorsque le support est liquide, il peut permettre d'obtenir une solution/dispersion adaptée pour appliquer un film ou une couche de matériau P sur un support solide, notamment tel que décrit dans le paragraphe précédent, ou encore sur un mur.

Un adhésif peut encore être disposé sur le textile, le film ou la couche de matériau P utilisé, voire, le cas échéant, sur le support solide du textile, du film ou de la couche de matériau P. Cela peut permettre une application plus aisée de la barrière.

Avantageusement, le support solide ne vient pas limiter la perméabilité à la vapeur du film, du textile ou de la couche de matériau P utilisé. De préférence, on emploie à cet effet un support solide dont la perméabilité à la vapeur est supérieure à celle du matériau P.

La barrière à la vapeur peut encore comprendre un adhésif disposé directement sur le copolyamide A ou sur le support solide de ladite barrière. Cette couche adhésive peut notamment permettre de fixer plus aisément ladite barrière.

En particulier la limitation de la perméabilité à la vapeur de la barrière à la vapeur est due uniquement au film, au textile ou à la couche de matériau P utilisé.

La barrière présente avantageusement une perméabilité à la vapeur à 23°C et à un taux d'humidité moyen de 25 % inférieure ou égale à 0,22 g.mm/m².J, en particulier inférieure ou égale à 0,20 g.mm/m².J, tout particulièrement inférieure ou égale à 0,18 g.mm/m².J, voire inférieure ou égale à 0,15 g.mm/m².J.

En particulier, la barrière présente une perméabilité à la vapeur d'eau à 23°C et à un taux d'humidité moyen de 25 % diminuée d'au moins 25 %, notamment d'au moins 30 % par rapport à du PA6 vierge.

En particulier dans le cas d'une utilisation par rapport aux charpentes de bâtiments, la barrière selon l'invention ayant une très faible perméabilité à la vapeur à faible taux d'humidité, elle peut donc notamment permettre d'isoler la charpente de l'humidité présente dans la maison, et donc permettre d'éviter que celle-ci ne condense sur la charpente. Cela peut en particulier correspondre à des conditions hivernales.

Ladite barrière peut présenter en outre une perméabilité à la vapeur d'eau à 23°C et à un taux d'humidité moyen de 75 % supérieure ou égale à 3,5 g.mm/m².J, notamment supérieure ou égale à 4 g.mm/m².J, tout particulièrement supérieure ou égale à 4,5 g.mm/m².J, voire supérieure ou égale à 5 g.mm/m².J.

Ceci peut en particulier permettre, lorsque l'humidité environnante est élevée, un bon échange et donc un séchage efficace des structures comprenant un matériau susceptible d'absorber de l'eau, comme le bois.

En particulier, la barrière présente une perméabilité à la vapeur d'eau à 23°C et à un taux d'humidité moyen de 75 % augmentée d'au moins 30 %, notamment d'au moins 40 % par rapport à du PA6 vierge.

Tout particulièrement, ledit matériau présente une perméabilité à la vapeur à un taux d'humidité moyen de 75 % au moins 20 fois supérieure à la perméabilité à la vapeur à un taux d'humidité moyen de 25 %.

La combinaison de ces propriétés peut donc permettre une bonne respiration en condition humides et une bonne isolation en conditions sèches.

La présente invention a également pour objet un élément de construction comprenant au moins un matériau de construction du type précité et au moins un film, un textile ou une couche de matériau P caractérisé en ce que ledit film, textile ou couche de matériau P est tel que défini précédemment selon le premier objet de l'invention. Dans un mode de réalisation, cet élément de construction peut comprendre un support solide choisi parmi les matériaux cellulosiques, les membranes, des plaques d'isolants.
Tout ce qui a été décrit précédemment dans le cadre de l'utilisation selon le premier objet de l'invention s'applique à cet élément de construction et en particulier au matériau de construction, au support solide éventuel et au matériau P.

L'invention concerne encore un article comprenant une barrière telle que définie ci-dessus, ledit article pouvant être un vêtement, notamment de ski et/ou de pluie, un sous vêtement, une partie de chaussure, en particulier de semelle de chaussure, un matériau de construction, comme une membrane pare-vapeur, une bâche, un article de literie, comme une couverture, un drap ou un oreiller, un matériau de recouvrement de meuble, comme un revêtement de siège, ...

Les exemples suivants sont destinés à illustrer l'invention sans toutefois en limiter la portée.

### PARTIE EXPERIMENTALE

### Caractérisations

### Analyse des propriétés physico-chimiques :

Les teneurs en groupements terminaux acide (GTC) et amine (GTA) sont dosées par potentiométrie, exprimées en meq/kg.

La masse molaire moyenne en nombre, Mn, est déterminée par la formule Mn=2.10⁶ / (GTA+GTC) et exprimée en g/mol.

### Analyse des propriétés thermiques :

Les températures de fusion (Tf), cristallisation au refroidissement (Tc) et température de transition vitreuse (Tg) des films extrudés obtenus sont déterminées par calorimétrie différentielle à balayage (DSC « Differential Scanning Calorimetry »), à l'aide d'un appareil TA Instruments Q2000, à une vitesse de 10°C/min. Le taux de cristallinité est obtenu par le calcul Xc=ΔHf/ΔHf°, avec ΔHf l'enthalpie de fusion de l'échantillon de polyamide testé et ΔHf° l'enthalpie de fusion d'un cristal pur de polyamide (ΔHf°(PA66)=188J/g). Les valeurs sont données pour des produits secs.

### Analyse de la perméabilité à la vapeur d'eau :

Les films extrudés sont conditionnés à 23°C à un degré d'hygrométrie de 50% (RH50) jusque qu'à ce que leur reprise en eau atteigne un équilibre. La perméabilité à la vapeur d'eau est ensuite évaluée à différent degrés d'hygrométrie :

### Degré d'hygrométrie moyen de 75% (RH₇₅) :

Des films polymères dont l'épaisseur a été mesurée précisément (environ 300 µm) sont fixés dans des coupelles de perméation en aluminium scellées de façon étanche et contenant de l'eau liquide, avec la face interne du film polymère en contact avec de la vapeur d'eau, et une lame d'air d'environ 1 cm étant présente entre l'eau liquide et le polymère. Puis les cellules sont placées dans un laboratoire dont l'environnement est régulé en température (23°C) et en hygrométrie (50%).

Dans cette configuration, le film polymère est exposé côté cellule à un degré d'hygrométrie de 100%, et côté environnement extérieur à un degré d'hygrométrie de 50%, le degré d'hygrométrie moyen dans la membrane pouvant être considéré étant égal à ((50+100)/2) = 75%.

La masse de l'ensemble (coupelle+film+eau) est mesurée au cours du temps. Au bout d'un certain temps appelé temps d'induction, une perte de masse correspondant à la perméation de la vapeur d'eau à travers le film de polymère depuis l'intérieur de la coupelle vers l'extérieur est mesurée, et une valeur de perméabilité représentant cette perte de masse rapportée au temps, à la surface de film et multipliée par l'épaisseur de film peut être établie (Perméabilité P exprimée en g.mm/m².J).

### Degré d'hygrométrie moyen de 25% (RH₂₅) :

Des films polymères dont l'épaisseur a été mesuré précisément (environ 300 µm) sont fixés dans des coupelles de perméation en aluminium scellées de façon étanche et contenant du gel de silice séché 48h à 110°C. La face interne du film polymère est en contact avec de l'air sec, une lame d'air d'environ 1 cm étant présente entre le gel de silice et le polymère.

Les cellules sont placées dans un laboratoire dont l'environnement est régulé en température (23°C) et en hygrométrie (50%). Dans cette configuration, le film polymère est exposé côté cellule à un degré d'hygrométrie de 0%, et côté environnement extérieur à un degré d'hygrométrie de 50%, le degré d'hygrométrie moyen dans la membrane pouvant être considéré étant égal à ((0+50)/2) = 25%.

La masse de l'ensemble (coupelle+film+eau) est mesurée au cours du temps. Au bout d'un certain temps appelé temps d'induction, une prise de masse correspondant à la perméation de la vapeur d'eau à travers le film de polymère depuis l'extérieur de la coupelle vers l'intérieur est mesurée, et une valeur de perméabilité représentant cette prise de masse rapportée au temps, à la surface de film et multipliée par l'épaisseur de film peut être établie (Perméabilité P à la vapeur d'eau exprimée en g.mm/m².J).

### Exemple 1 (comparatif) : films de PA66 non modifié

Dans un réacteur de polymérisation sont introduits 92,6 kg (353 mol) de sel N (sel 1:1 d'hexaméthylène diamine et d'acide adipique), 84 kg d'eau déminéralisée et 6,4 g d'agent antimousse Silcolapse 5020®. Le polyamide 66 est fabriqué selon un procédé standard de polymérisation de type polyamide 66, avec 30 minutes de finition. Le polymère obtenu est coulé sous forme de jonc, refroidi et mis sous forme de granulé par coupe des joncs.

Le polymère obtenu présente les caractéristiques suivantes : GTC = 70,2 meq/kg, GTA = 51,5 meq/kg, Mn = 16430 g/mol.

Les granulés de PA66 sont ensuite introduits dans une extrudeuse bi-vis corotative Leistritz (D=34, L/D=35), la vitesse de vis étant 255 tours/minute et la température 280°C. Une filmeuse OCS comportant une filière plate (largeur 300, écartement 500µm) permet d'obtenir au final des films d'épaisseur 300µm, le film en sortie de filière étant étiré à une vitesse de 2 m/minute, la température du rouleau de refroidissement étant de 135°C.

Les films obtenus présentent les caractéristiques thermiques suivantes :
PA 66 : Tg = 62°C, Tf = 262°C, Tc = 229°C, ΔHf = 68 J/g soit Xc = 36.1%

Les propriétés barrière à la vapeur d'eau à 23°C sont ensuite déterminées.
- A RH₂₅, la perméabilité P_{RH25} est de 0,23 ± 0,01 g.mm/m².J
- A RH₇₅, la perméabilité P_{RH75} est de 2,7 ± 0,5 g.mm/m².J

### Exemple 2 : Polyamide 66 sulfonate PA66/6AISLi 95/5 mol/mol

Dans un réacteur de polymérisation sont introduits 85,9 kg (327,5 mol) de sel N (sel 1:1 d'hexaméthylène diamine et d'acide adipique), 4657 g de sel de lithium d'acide 5-sulfoisophtalique à 93,33% (AISLi) (17,24 mol), 6435 g d'une solution d'hexaméthylène diamine (HMD) en solution dans l'eau à 32,47 % en poids (17,98 mol) et 81,2 kg d'eau déminéralisée et 6,4 g d'agent antimousse Silcolapse 5020®. Le polyamide 66 sulfonate est fabriqué selon un procédé standard de polymérisation de type polyamide 66, avec 30 minutes de finition à pression atmosphérique. Le polymère obtenu est coulé sous forme de jonc, refroidi et mis sous forme de granulé par coupe des joncs.

Le polymère obtenu présente les caractéristiques suivantes: GTC =102,6 meq/kg, GTA = 94,3 meq/kg, Mn = 10160 g/mol.

Les granulés de PA66 sulfonate PA 66/6AISLi 95/5 mol/mol sont ensuite introduits dans une extrudeuse bi-vis corotative Leistritz (D=34, L/D=35), la vitesse de vis étant 255 tours/minute et la température 280°C. Une filmeuse OCS comportant une filière plate (largeur 300, écartement 500µm) permet d'obtenir au final des films d'épaisseur 300µm, le film en sortie de filière étant étiré à une vitesse de 2 m/minute, la température du rouleau de refroidissement étant de 135°C.

Le film obtenu présente les caractéristiques thermiques suivantes :
PA66/6AISLi (95/5) : Tg = 88°C, Tf = 253°C, Tc = 220°C, ΔHf = 66 J/g soit Xc = 35%

Les propriétés barrière à la vapeur d'eau à 23°C sont ensuite déterminées.
- à RH₂₅, la perméabilité P_{RH25} est de 0,14 ± 0,01 g.mm/m².J, soit une réduction de perméabilité de 40% en comparaison du film de PA66 non modifié.
- à RH₇₅, la perméabilité P_{RH75} est de 5,3 ± 0,3 g.mm/m².J, soit une augmentation de perméabilité de 100% en comparaison du film de PA66 non modifié.

Le film PA66/6AISLi 95/5 mol/mol présente ainsi une diminution de la perméabilité en conditions type « hiver » (à faible RH on a -40%) et une augmentation de la perméabilité en conditions type « été » (à fort RH on a +100%) par rapport à un film de PA66 non modifié. On obtient un facteur 38 entre la perméabilité à faible RH et la perméabilité à fort RH.

### Exemple 3 : Polyamide 66 sulfonate PA66/6AISNa 95/5 mol/mol

Le polyamide de l'exemple 3 est réalisé selon le même protocole que celui présenté dans l'exemple 2, hormis que du sel de sodium d'acide 5-sulfoisophtalique à 95%(AISNa) est utilisé.

Le polymère obtenu présente les caractéristiques suivantes: GTC =112,7 meq/kg, GTA = 99,0 meq/kg, Mn = 9 450 g/mol.

Les granulés puis le film de ce polyamide sont obtenus de la même manière que décrite dans l'exemple 2.

Le film obtenu présente les caractéristiques thermiques suivantes :
PA66/6AISNa (95/5) : Tg = 87°C, Tf = 253°C, Tc = 221 °C, ΔHf = 64 J/g soit Xc = 34%

Les propriétés barrière à la vapeur d'eau à 23°C sont ensuite déterminées.
- à RH₂₅, la perméabilité P_{RH25} est de 0,21 ± 0,02 g.mm/m².J, soit une réduction de perméabilité de 10% en comparaison du film de PA66 non modifié.
- à RH₇₅, la perméabilité P_{RH75} est de 11,79 ± 0,2 g.mm/m².J, soit une augmentation de perméabilité de plus de 300% en comparaison du film de PA66 non modifié.

Le film PA66/6AISNa 95/5 mol/mol présente ainsi une diminution de la perméabilité en conditions type « hiver » (à faible RH on a -10%) et une très forte augmentation de la perméabilité en conditions type « été » (à fort RH on a +300%) par rapport à un film de PA66 non modifié. On obtient un facteur 56 entre la perméabilité à faible RH et la perméabilité à fort RH.

## Revendications

1. Utilisation à titre de barrière à la vapeur d'eau,
- d'un film, d'un textile ou d'une couche de matériau P, ledit matériau P comprenant, voire consistant en, au moins un copolymère A qui est un polyamide de type PAXY/XAIS Mⁿ⁺_{1/n}, en particulier PA66/6AISMⁿ⁺_{1/n}, plus particulièrement PA66/6AISLi et/ou PA PA66/6AISNa, ou de type PAZ/XAISMⁿ⁺_{1/n},
dans lesquels
∘ X, Y et Z représentent indépendamment les uns des autres des entiers allant de 3 à 36, en particulier de 4 à 18, notamment de 4 à 12,
∘ Mⁿ⁺_{1/n}, avec n représentant le nombre de charges de M, et M représente Li⁺, Na⁺, K⁺, Ag⁺, Cu⁺, Cu²⁺ Zn²⁺, Mn²⁺, Mg²⁺, Fe²⁺, Fe³⁺, Al³⁺, NH⁴⁺, et/ou phosphonium, en particulier Li⁺ et/ou Na⁺, notamment Li⁺, et
∘ AIS représente le résidu issu de l'acide 5-sulfoisophtalique et éventuellement en association avec un support et/ou un adhésif.

2. Utilisation selon la revendication 1, **caractérisée en ce que** ledit film, textile ou couche de matériau P, présente un rapport (perméabilité à la vapeur d'eau, à 23°C et à un taux d'humidité moyen de 75 %) / (perméabilité à la vapeur d'eau, à 23°C et à un taux d'humidité moyen de 25 %) supérieur ou égal à 15, notamment supérieur ou égal à 20, en particulier supérieur ou égal à 25, tout particulièrement supérieur ou égal à 30, voire supérieur ou égal à 35.

3. Utilisation selon la revendication 1 ou 2, **caractérisée en ce que** ledit film, textile ou couche de matériau P, présente une perméabilité à la vapeur d'eau :
- inférieure ou égale à 0,25 g.mm/m².J, à 23°C et à un taux d'humidité moyen de 25 %, et/ou
- supérieure ou égale à 3 g.mm/m².J, à 23°C et à un taux d'humidité moyen de 75 %.

4. Utilisation selon l'une quelconque des revendications 1 à 3, **caractérisée en ce que** le copolymère A est obtenu par polymérisation :
- d'une diamine choisi parmi 1,4-diaminobutane, 1,5-diaminopentane, 1,6-diaminohexane ou hexaméthylène diamine (HMD), 2-méthyl pentaméthylène diamine, 2-méthyl hexaméthylène diamine, 3-méthyl hexaméthylène diamine, 2,5-diméthyl hexaméthylène diamine, 2,2-diméthylpentaméthylène diamine, 1,8-diaminooctane, méthyl-1,8-diamino octane, 1,9-diamino nonane, 5-méthylnonane diamine, 1,10-diamino décane ou décaméthylènediamine, 1,12-diamino dodécane, ou dodécaméthylène diamine, et N-(6-aminohexyl)-N-méthyl-1,6-hexanediamine,
- d'un diacide choisi parmi parmi l'acide oxalique, l'acide succinique (HOOC-(CH₂)₂-COOH), l'acide glutarique (HOOC-(CH₂)₃-COOH), l'acide 2-méthyl-glutarique (HOOC-CH(CH₃)-(CH₂)₂-COOH), l'acide 2,2-diméthyl-glutarique (HOOC-C(CH₃)₂-(CH₂)₂-COOH), l'acide adipique (HOOC-(CH₂)₄-COOH), l'acide 2,4,4-triméthyl-adipique (HOOC-CH(CH₃)-CH₂-C(CH₃)₂-CH₂-COOH), l'acide pimélique (HOOC-(CH₂)₅-COOH), l'acide subérique (HOOC-(CH₂)₆-COOH), l'acide azélaique (HOOC-(CH₂)₇-COOH), l'acide sébacique (HOOC-(CH₂)₈-COOH), l'acide undécanedioique (HOOC-(CH₂)₉-COOH), et l'acide dodécanedioique (HOOC-(CH₂)₁₀-COOH), l'acide téréphtalique, l'acide isophtalique, et
- d'acide 5-sulfoisophtalique de lithium, de sodium, de potassium, d'argent, de cuivre, I ou II, de zinc, de manganèse, de magnésium, de fer, II ou III, d'ammonium ou de phosphonium.

5. Utilisation selon l'une quelconque des revendications 1 à 3, **caractérisée en ce que** le copolymère A est obtenu par polymérisation :
- d'une diamine choisi parmi 1,4-diaminobutane, 1,5-diaminopentane, 1,6-diaminohexane ou hexaméthylène diamine (HMD), 2-méthyl pentaméthylène diamine, 2-méthyl hexaméthylène diamine, 3-méthyl hexaméthylène diamine, 2,5-diméthyl hexaméthylène diamine, 2,2-diméthylpentaméthylène diamine, 1,8-diaminooctane, méthyl-1,8-diamino octane, 1,9-diamino nonane, 5-méthylnonane diamine, 1,10-diamino décane ou décaméthylènediamine, 1,12-diamino dodécane, ou dodécaméthylène diamine, et N-(6-aminohexyl)-N-méthyl-1,6-hexanediamine,
- d'un amino-acide ou d'un lactame choisi parmi le caprolactame, l'acide 6-aminohexanoique, l'acide 10-aminodecanoique, l'acide 11-aminoundecanoique, et le 12-dodécanolactame, et
- d'acide 5-sulfoisophtalique de lithium, de sodium, de potassium, d'argent, de cuivre, I ou II, de zinc, de manganèse, de magnésium, de fer, II ou III, d'ammonium ou de phosphonium.

6. Utilisation selon l'une quelconque des revendications 1 à 4, **caractérisée en ce que** le copolymère A comprend, voire est constitué de, PA66/6AISLi et/ou PA66/6AISNa.

7. Utilisation selon l'une quelconque des revendications 1 à 6, **caractérisée en ce que** le copolymère A comprend une teneur en motif de répétition aromatique, notamment 6AISLi et 6AISNa, allant de 0,1 à 60 mol%, en particulier de 0,1 à 20 mol%, notamment de 0,5 à 20 mol%, par exemple de 0,5 à 15 mol% par rapport au nombre total de motif de répétition dans le polyamide.

8. Utilisation selon l'une quelconque des revendications 1 à 7, **caractérisée en ce que** le matériau P comprend au moins un autre polymère, dans ce cas le polyamide constitue une phase continue, en particulier ledit polymère est choisi parmi les agents modificateurs de chocs, et/ou des polymères thermoplastiques tels que les polyéthylènes, ou PE, les polystyrènes, ou PS, les polypropylènes, ou PP, les polyesters, les polycarbonates, ou PC, les polyphénylène oxydes, ou PPO, les polyphénylène éthers, ou PPE, et leurs mélanges.

9. Utilisation selon l'une quelconque des revendications 1 à 8, **caractérisée en ce que** le matériau P comprend au moins un agent modificateur du choc, c'est-à-dire un composé capable de modifier la résistance aux chocs d'une composition polyamide, en particulier ces agents modificateurs du choc comprennent préférentiellement des groupements fonctionnels réactifs avec le polyamide.

10. Utilisation selon l'une quelconque des revendications 1 à 9, **caractérisée en ce que** le film de matériau P présente une épaisseur allant de 10 à 500 µm, la couche de matériau P présente une épaisseur allant de 1 à 500 µm ou le textile de matériau P présente une épaisseur allant de 50 µm à 2 mm.

11. Utilisation selon l'une quelconque des revendications 1 à 10, **caractérisée en ce que** le matériau P est utilisé avec un support et/ou un adhésif.

12. Utilisation selon la revendication 11, **caractérisée en ce que** le matériau P est utilisé avec un support solide choisi parmi un matériau cellulosique, notamment renforcé en fibres, comme un papier, une membrane, notamment en étoffe de fibres synthétiques ou un film polyéthylène perforé, un matériau de construction, ou encore sur des plaques d'isolants, comme de la laine de verre.

13. Utilisation selon l'une des revendications 11 ou 12, **caractérisée en ce que** le matériau P est utilisé avec un matériau de construction et/ou une membrane.

14. Utilisation selon la revendication 13, **caractérisée en ce que** le matériau de construction est choisi parmi le bois et les isolants fibreux.

15. Elément de construction comprenant au moins un film, un textile ou une couche de matériau P tel que défini dans l'une des revendications 1 à 10 et au moins un matériau de construction adapté pour la réalisation de structures de murs ou de toitures.

## Patentansprüche

1. Verwendung als Wasserdampfbremse
- eines Films, einer Textilie oder einer Schicht aus Material P, wobei das Material P mindestens ein Copolymer A, das ein Polyamid des Typs PAXY/XAIS Mⁿ⁺_{1/n}, insbesondere PA66/6AISMⁿ⁺_{1/n}, insbesondere PA66/6AISLi und/oder PA PA66/6AISNa, oder des Typs PAZ/XAISMⁿ⁺_{1/n} umfasst oder daraus besteht,
in denen
∘ X, Y und Z unabhängig voneinander für ganze Zahlen im Bereich von 3 bis 36, insbesondere von 4 bis 18, insbesondere von 4 bis 12 stehen,
∘ Mⁿ⁺_{1/n} mit n, das für die Anzahl der Ladungen von M steht, und M für Li⁺, Na⁺, K⁺, Ag⁺, Cu⁺, Cu²⁺ Zn²⁺, Mn²+, Mg²⁺, Fe²⁺, Fe³⁺, Al³⁺, NH⁴⁺ und/oder Phosphonium, insbesondere Li⁺ und/oder Na⁺, insbesondere Li⁺, steht, und
∘ AIS für den Rest, der von 5-Sulfoisophthalsäure stammt, und gegebenenfalls in Verbindung mit einem Träger und/oder einem Klebstoff steht.

2. Verwendung nach Anspruch 1, **dadurch gekennzeichnet, dass** der Film, die Textile oder die Schicht aus Material P ein Verhältnis (Wasserdampfdurchlässigkeit bei 23°C und bei einem durchschnittlichen Feuchtigkeitsgehalt von 75 %)/(Wasserdampfdurchlässigkeit bei 23°C und einem durchschnittlichen Feuchtigkeitsgehalt von 25%) aufweist, das größer als oder gleich 15, insbesondere größer als oder gleich 20, insbesondere größer als oder gleich 25, ganz besonders bevorzugt größer als oder gleich 30, sogar größer als oder gleich 35 ist.

3. Verwendung nach Anspruch 1 oder 2, **dadurch gekennzeichnet, dass** der Film, die Textile oder die Schicht aus Material P eine Wasserdampfdurchlässigkeit aufweist :
- die niedriger als oder gleich 0,25 g.mm/m².J bei 23°C und bei einem durchschnittlichen Feuchtigkeitsgehalt von 25 % ist, und/oder
- die größer als oder gleich 3 g.mm/m².J bei 23°C und bei einem durchschnittlichen Feuchtigkeitsgehalt von 75 % ist.

4. Verwendung nach einem der Ansprüche 1 bis 3, **dadurch gekennzeichnet, dass** das Copolymer A erhalten wird durch Polymerisation :
- von einem Diamin, ausgewählt aus 1,4-Diaminobutan, 1,5-Diaminopentan, 1,6-Diaminohexan oder Hexamethylendiamin (HMD), 2-Methylpentamethylendiamin, 2-Methylhexamethylendiamin, 3 -Methylhexamethylendiamin, 2,5 -Dimethylhexamethylendiamin, 2,2-Dimethylpentamethylendiamin, 1,8-Diaminooctan, Methyl-1,8-diaminooctan, 1,9-Diaminononan, 5-Methylnonandiamin, 1,10-Diaminodecan oder Decamethylendiamin, 1,12-Diamino-Dodecan oder Dodecamethylendiamin und N-(6-Aminohexyl)-N-methyl-1,6-hexandiamin,
- von einer Disäure, ausgewählt aus Oxalsäure, Bernsteinsäure (HOOC-(CH₂)₂-COOH), Glutarsäure (HOOC-(CH₂)₃-COOH), 2-Methylglutarsäure (HOOC-CH(CH₃)-(CH₂)₂-COOH), 2,2-Dimethylglutarsäure (HOOC-C(CH₃)₂-(CH₂)₂-COOH), Adipinsäure (HOOC-CH(CH₃)(CH₂)₄-COOH), 2,4,4-Trimethyladipinsäure (HOOC-CH(CH₃)-CH₂-C(CH₃)₂-CH₂-COOH), Pimelinsäure (HOOC-(CH₂)₅-COOH), Suberinsäure (HOOC-(CH₂)₆-COOH), Azelainsäure (HOOC-(CH₂)₇-COOH), Sebacinsäure (HOOC(CH₂)₈-COOH), Undecansäure (HOOC-(CH₂)₉-COOH) und Dodecandisäure (HOOC-(CH₂)₁₀-COOH), Terephthalsäure, Isophthalsäure und
- von 5-Sulfoisophthalsäure von Lithium, Natrium, Kalium, Silber, Kupfer(I) oder (II), Zink, Mangan, Magnesium, Eisen(II) oder (III), Ammonium oder Phosphonium.

5. Verwendung nach einem der Ansprüche 1 bis 3, **dadurch gekennzeichnet, dass** das Copolymer A erhalten wird durch Polymerisation :
- von einem Diamin, ausgewählt aus 1,4-Diaminobutan, 1,5-Diaminopentan, 1,6-Diaminohexan oder Hexamethylendiamin (HMD), 2-Methylpentamethylendiamin, 2-Methylhexamethylendiamin, 3 -Methylhexamethylendiamin, 2,5 -Dimethylhexamethylendiamin, 2,2-Dimethylpentamethylendiamin, 1,8-Diaminooctan, Methyl-1,8-diaminooctan, 1,9-Diaminononan, 5-Methylnonandiamin, 1,10-Diaminodecan oder Decamethylendiamin, 1,12-Diamino-Dodecan oder Dodecamethylendiamin und N-(6-Aminohexyl)-N-methyl-1,6-hexandiamin,
- von einer Aminosäure oder einem Lactam, ausgewählt aus Caprolactam, 6-Aminohexansäure, 10-Aminodecansäure, 11-Aminoundecansäure und 12-Dodecanolactam, und
- von 5-Sulfoisophthalsäure von Lithium, Natrium, Kalium, Silber, Kupfer(I) oder (II), Zink, Mangan, Magnesium, Eisen(II) oder (III), Ammonium oder Phosphonium.

6. Verwendung nach einem der Ansprüche 1 bis 4, **dadurch gekennzeichnet, dass** das Copolymer A PA66/6AISLi und/oder PA66/6AISNa umfasst oder daraus gebildet ist.

7. Verwendung nach einem der Ansprüche 1 bis 6, **dadurch gekennzeichnet, dass** das Copolymer A einen Gehalt an aromatischen Wiederholungseinheiten, insbesondere 6AISLi und 6AISNa, im Bereich von 0,1 bis 60 Mol-%, insbesondere von 0,1 bis 20 Mol-%, insbesondere 0,5-bis-20-Mol-%, beispielsweise von 0,5 bis 15 Mol-%, bezogen auf die Gesamtzahl von Wiederholungseinheiten im Polyamid, umfasst.

8. Verwendung nach einem der Ansprüche 1 bis 7, **dadurch gekennzeichnet, dass** das Material P mindestens ein anderes Polymer, wobei das Polyamid in diesem Fall eine kontinuierliche Phase darstellt, das Polymer insbesondere unter den Schlagzähmodifikatoren ausgewählt ist, und/oder thermoplastische Polymere umfasst, wie Polyethylene oder PE, Polystyrole oder PS, Polypropylene oder PP, Polyester, Polycarbonate oder PC, Polyphenylenoxide oder PPO, Polyphenylenether oder PPE und Mischungen davon.

9. Verwendung nach einem der Ansprüche 1 bis 8, **dadurch gekennzeichnet, dass** das Material P mindestens einen Schlagzähmodifikator umfasst, das heißt eine Verbindung, die die Schlagzähigkeit einer Polyamidzusammensetzung modifizieren kann, diese Schlagzähmodifikatoren insbesondere vorzugsweise funktionelle Gruppen, die mit dem Polyamid reaktiv sind, enthalten.

10. Verwendung nach einem der Ansprüche 1 bis 9, **dadurch gekennzeichnet, dass** der Film aus Material P eine Dicke im Bereich von 10 bis 500 µm aufweist, die Schicht aus Material P eine Dicke im Bereich von 1 bis 500 µm oder die Textilie aus Material P eine Dicke im Bereich von 50 µm bis 2 mm aufweist.

11. Verwendung nach einem der Ansprüche 1 bis 10, **dadurch gekennzeichnet, dass** das Material P mit einem Träger und/oder einem Klebstoff verwendet wird.

12. Verwendung nach Anspruch 11, **dadurch gekennzeichnet, dass** das Material P mit einem festen Träger verwendet wird, ausgewählt aus einem Cellulosematerial, das insbesondere faserverstärkt ist, wie einem Papier, einer Membran, insbesondere aus Stoff aus synthetischen Fasern oder einer perforierten Polyethylenfolie, einem Baustoff oder auch auf Dämmstoffplatten wie Glaswolle.

13. Verwendung nach einem der Ansprüche 11 oder 12, **dadurch gekennzeichnet, dass** das Material P mit einem Baustoff und/oder einer Membran verwendet wird.

14. Verwendung nach Anspruch 13, **dadurch gekennzeichnet, dass** der Baumstoff aus Holz und Faserdämmstoffen ausgewählt ist.

15. Bauelement, umfassend mindestens einen Film, eine Textilie oder eine Schicht aus Material P, wie in einem der Ansprüche 1 bis 10 definiert, und mindestens einen Baumstoff, der zur Herstellung von Wand- und Dachstrukturen geeignet ist.

## Claims

1. Use, as a water vapor barrier,
- of a film, a textile or a layer of material P, said material P comprising, or even consisting of, at least one copolymer A which is a polyamide of PAXY/XAIS Mⁿ⁺_{1/n} type, in particular PA66/6AISMⁿ⁺_{1/n}, more particularly PA66/6AISLi and/or PA PA66/6AISNa, or of PAZ/XAISMⁿ⁺_{1/n} type,
in which
∘ X, Y and Z represent, independently of one another, integers ranging from 3 to 36, in particular from 4 to 18, especially from 4 to 12,
∘ Mⁿ⁺_{1/n}, with n representing the number of charges of M, and M representing Li⁺, Na⁺, K⁺, Ag⁺, Cu⁺, Cu²⁺ Zn²⁺, Mn²⁺, Mg²⁺, Fe²⁺, Fe³⁺, Al³⁺, NH⁴⁺, and/or phosphonium, in particular Li⁺ and/or Na⁺, in particular Li⁺, and
∘ AIS represents the residue derived from 5-sulfoisophthalic acid and
optionally in combination with a support and/or an adhesive.

2. Use according to Claim 1, **characterized in that** said film, textile or layer of material P, has a (water vapor permeability at 23°C and at an average humidity level of 75%) / (water vapor permeability at 23°C and at an average humidity level of 25%) ratio greater than or equal to 15, especially greater than or equal to 20, in particular greater than equal to 25, quite particularly greater than or equal to 30, or even greater than or equal to 35.

3. Use according to Claim 1 or 2, **characterized in that** said film, textile or layer of material P, has a water vapor permeability :
- less than or equal to 0.25 g.mm/m².J, at 23°C and at an average humidity level of 25%, and/or
- greater than or equal to 3 g.mm/m².J, at 23°C and at an average humidity level of 75%.

4. Use according to any one of Claims 1 to 3, **characterized in that** the copolymer A is obtained by polymerization :
- of a diamine selected from 1,4-diaminobutane, 1,5-diaminopentane, 1,6-diaminohexane or hexamethylenediamine (HMD), 2-methylpentamethylenediamine, 2-methylhexamethylenediamine, 3-methylhexamethylenediamine, 2,5-dimethylhexamethylenediamine, 2,2-dimethylpentamethylenediamine, 1,8-diaminooctane, methyl-1,8-diaminooctane, 1,9-diaminononane, 5-methylnonanediamine, 1,10-diaminodecane or decamethylenediamine, 1,12-diaminododecane, or dodecamethylenediamine, and N-(6-aminohexyl)-N-methyl-1,6-hexanediamine,
- of a diacid selected from oxalic acid, succinic acid (HOOC-(CH₂)₂-COOH), glutaric acid (HOOC-(CH₂)₃-COOH), 2-methylglutaric acid (HOOC-CH(CH₃)-(CH₂)₂-COOH), 2,2-dimethylglutaric acid (HOOC-C(CH₃)₂-(CH₂)₂-COOH), adipic acid (HOOC-(CH₂)₄-COOH), 2,4,4-trimethyladipic acid (HOOC-CH(CH₃)-CH₂-C(CH₃)₂-CH₂-COOH), pimelic acid (HOOC-(CH₂)₅-COOH), suberic acid (HOOC-(CH₂)₆-COOH), azelaic acid (HOOC-(CH₂)₇-COOH), sebacic acid (HOOC-(CH₂)₈-COOH), undecanedioic acid (HOOC-(CH₂)₉-COOH), dodecanedioic acid (HOOC-(CH₂)₁₀-COOH), terephthalic acid and isophthalic acid, and
- of 5-sulfoisophthalic acid of lithium, sodium, potassium, silver, copper I or II, zinc, manganese, magnesium, iron II or III, ammonium or phosphonium.

5. Use according to any one of Claims 1 to 3, **characterized in that** the copolymer A is obtained by polymerization:
- of a diamine selected from 1,4-diaminobutane, 1,5-diaminopentane, 1,6-diaminohexane or hexamethylenediamine (HMD), 2-methylpentamethylenediamine, 2-methylhexamethylenediamine, 3 -methylhexamethylenediamine, 2,5 -dimethylhexamethylenediamine, 2,2-dimethylpentamethylenediamine, 1,8-diaminooctane, methyl-1,8-diaminooctane, 1,9-diaminononane, 5-methylnonanediamine, 1,10-diaminodecane or decamethylenediamine, 1,12-diaminododecane, or dodecamethylenediamine, and N-(6-aminohexyl)-N-methyl-1,6-hexanediamine,
- of an amino acid or a lactam selected from caprolactam, 6-aminohexanoic acid, 10-aminodecanoic acid, 11-aminoundecanoic acid and 12-dodecanolactam, and
- of 5-sulfoisophthalic acid of lithium, sodium, potassium, silver, copper I or II, zinc, manganese, magnesium, iron II or III, ammonium or phosphonium.

6. Use according to any one of Claims 1 to 4, **characterized in that** the copolymer A comprises, or even consists of, PA66/6AISLi and/or PA66/6AISNa.

7. Use according to any one of Claims 1 to 6, **characterized in that** the copolymer A comprises a content of aromatic repeat unit, in particular 6AISLi and 6AISNa, ranging from 0.1 to 60 mol%, in particular from 0.1 to 20 mol%, especially from 0.5 to 20 mol%, for example from 0.5 to 15 mol%, relative to the total number of repeat units in the polyamide.

8. Use according to any one of Claims 1 to 7, **characterized in that** the material P comprises at least one other polymer, in this case the polyamide constitutes a continuous phase, in particular said polymer is selected from impact modifiers, and/or thermoplastic polymers such as polyethylenes, or PE, polystyrenes, or PS, polypropylenes, or PP, polyesters, polycarbonates, or PC, polyphenylene oxides, or PPO, polyphenylene ethers, or PPE, and mixtures thereof.

9. Use according to any one of Claims 1 to 8, **characterized in that** the material P comprises at least one impact modifier, i.e. a compound capable of modifying the impact strength of a polyamide composition, in particular these impact modifiers preferentially comprise functional groups which are reactive with the polyamide.

10. Use according to any one of Claims 1 to 9, **characterized in that** the film of material P has a thickness ranging from 10 to 500 µm, the layer of material P has a thickness ranging from 1 to 500 µm or the textile of material P has a thickness ranging from 50 µm to 2 mm.

11. Use according to any one of Claims 1 to 10, **characterized in that** the material P is used with a support and/or an adhesive.

12. Use according to Claim 11, **characterized in that** the material P is used with a solid support selected from a cellulose-based material, in particular reinforced with fibers, such as a paper, a membrane, in particular made of fabric of synthetic fibers or a perforated polyethylene film, a construction material, or else on sheets of insulating materials, such as glass wool.

13. Use according to either of Claims 11 and 12, **characterized in that** the material P is used with a construction material and/or a membrane.

14. Use according to Claim 13, **characterized in that** the construction material is selected from wood and fibrous insulating materials.

15. Construction element comprising at least one film, one textile or one layer of material P as defined in one of Claims 1 to 10 and at least one construction material suitable for producing wall or roof structures.
